Europäisches Patentamt

**European Patent Office**

Office européen des brevets

(11) Publication number: **0 180 035**
**A1**

(12) **EUROPEAN PATENT APPLICATION**

(21) Application number: **85112123.6**

(22) Date of filing: **25.09.85**

(51) Int. Cl.⁴: **H 05 K 5/00**

(30) Priority: **27.09.84 DK 4639/84**

(43) Date of publication of application: **07.05.86**
**Bulletin 86/19**

(84) Designated Contracting States: **DE FR GB NL SE**

(71) Applicant: **STORNO A/S, Artillerivej 126,**
**DK-2300 Copenhagen S (DK)**

(72) Inventor: **Lollesgaard, Jorgen, Tranegaardsvej 72, 2.,**
**DK-2900 Hellerup (DK)**
Inventor: **Vendelso, Jorgen, Tjornevej 47,**
**DK-2800 Lyngby (DK)**

(74) Representative: **Patentanwälte Grünecker, Kinkeldey,**
**Stockmair & Partner, Maximilianstrasse 58,**
**D-8000 München 22 (DE)**

(54) **A mounting device for releasably mounting an apparatus, such as a radio, radiophone or another electric apparatus on a panel or wall.**

(57) A mounting device for releasably mounting an apparatus (19), such as a radio, a wireless, or a radiophone, and for connecting such apparatus to a power source comprises a first power source connector (28) for receiving a corresponding second power source connector (27) on the apparatus (19). A frame structure (10) of the mounting device is adapted to slidingly receive the apparatus (19) through an open end defined by a front portion of the frame structure, which includes guide surfaces for guiding the apparatus and its power source connector (27) along a predetermined path. The power source connector (28) of the mounting device is arranged on a connector carrier member (29) which is displaceable in relation to the frame structure so that the connector thereon may be moved along said predetermined path of the other power source connector (27) between a first position remote from the front portion of the frame structure, and a second position closer to this front portion. When a radiophone or another apparatus (19) is inserted into the mounting device through the open end of its frame structure, the power source connector (27) and the connector (28) of the mounting device are brought into mutual engagement. When the apparatus (19) is being withdrawn from the mounting device, the connectors (27 and 28) will remain in mutual engagement and jointly move along their predetermined path till they reach the said second position of the connector carrier member (29) at which

position the connector (28) of the mounting device is stopped so that further withdrawal of the apparatus from the frame structure will course disengagement of the power source connectors. This means that only a relatively small pulling force is required during the first step of withdrawal. Thereafter it is possible to obtain a better grip around the withdrawn part of the apparatus so that the increased pulling force required for disengaging the connectors (27 and 28) may better be applied to the apparatus.

# A MOUNTING DEVICE FOR RELEASABLY MOUNTING AN APPARATUS, SUCH AS A RADIO, RADIOPHONE OR ANOTHER ELECTRIC APPARATUS ON A PANEL OR WALL

The present invention relates to a mounting device for releasably mounting an apparatus, such as a radio, wireless, a radiophone, a radar apparatus, or another apparatus requiring power supply from a source of electric energy or another kind of energy.

The electrical apparatuses of the above mentioned type which are used in cars, boats, and other vehicles, are normally mounted so that the front panel or control panel of the electric apparatus flushes with the surface of the wall or panel (such as the instrument board of a car or boat) on which the apparatus is mounted.

Normally, the apparatus is received in a cassette or housing, which extends inwardly from the inner side of the wall or panel and which has an electrically connecting socket mounted on a bottom wall. A radio or another electric apparatus may then be inserted into the housing through an opening formed in the wall or panel, and guide members or guide surfaces formed in the inner surfaces of the housing may cooperate with complementary side surfaces on the outer side walls of the apparatus so that an electric connecting plug on the rear wall of the apparatus is brought into engagement with the socket connection on the bottom wall of the housing when the apparatus has been put into the housing to a position in which the front panel or control panel of the apparatus substantially flushes with the outer surface of the wall or panel. In this position the apparatus is connected to a suitable power source, such as the power source or battery of a car or boat, and the apparatus may be locked in this position by means of suitable locking means.

If the apparatus is to be removed from the housing after unlocking it is necessary to apply to the apparatus a pulling or extraction force which is sufficient to overcome not only the frictional forces between the outer side walls of the apparatus and the inner side walls of the

P&V F4392 jA, 424392/KEV/IPb, 1984 09 13

housing, but additionally a force necessary to disengage the electrical plug and socket connection. Because the front panel or the control panel of the apparatus substantially flushes with the outer surface of the wall in which the apparatus is mounted, it is very difficult to have a sufficiently firm hold of the front portion of the apparatus to be able to withdraw the apparatus from the housing.

This problem has been solved by the present invention. Thus, the present invention provides a mounting device for releasably mounting an apparatus and for connecting it to a power source or another external device, said mounting device comprising a first power source connector for matingly receiving a corresponding second power source connector on said apparatus, a frame structure for slidingly receiving the apparatus through an open end defined by a front portion of the frame structure, which includes guide surfaces for guiding the apparatus and said second power source connector thereon along a predetermined path, a connector carrier member, which carries said first power source connector, and which is connected to said frame structure so as to be displaceable in relation thereto between a first position remote from said front portion, and a second position closer to the front portion, and guide means for guiding the movement of the carrier member between said first and second positions so as to cause said first power source connector to follow said predetermined path, whereby said first and second connectors are brought into mutual engagement when the apparatus is inserted into the frame structure through said open end thereof.

This mounting device may comprise a transversely extending wall or panel at the front portion of the frame structure, or this front portion may be adapted to be fastened to such wall or panel. When an apparatus is inserted into the frame structure through the open end thereof, the second power source connector of the apparatus is automatically brought into engagement with the first power source connector on the frame structure and thereby connected to a power source, while the connector carrier member is moved to its first position remote from the front portion of the frame structure, whereby the front panel of the apparatus will substantially flush with the

P&V F4392 jA, 424392/KEV/IPb, 1984 09 13

panel or wall to which the front portion of the frame structure is fastened. If desired, the apparatus may be locked in that position in relation to the frame structure by suitable locking means.

When the apparatus has been unlocked and a slight pulling force is applied to the front panel of the apparatus, the apparatus will move outwards in relation to the frame structure while the connector carrier member is simultaneously moved from its first to its second position, which means that the first and second power connectors remain mutually engaged. Now, when the front portion of the apparatus extends from the outer surface of the wall or panel it is possible to firmly grip the extending front portion of the apparatus and apply a pulling force thereto sufficient to disengage the power source connectors.

In principle, the apparatus to be mounted may be of any type, such as an electric apparatus or an apparatus driven by pressurized air or by a hydraulic medium. In the preferred embodiment, however, the mounting device according to the invention is adapted to receive an electric apparatus, such as a radio, a wireless, or a radiophone. Correspondingly, the first and second power source connectors may be tube connectors for a pneumatic or hydraulic tube or conduit. However, in the preferred embodiment the power source connectors form an electric plug-and-socket connection for connecting the apparatus to an electric power source and/or to an electric signal source, such as an antenna.

Generally, the guide surfaces and the guide means of the mounting device may be adapted to guide the movement of the apparatus and of the connector carrier member along any suitable path, such as the arc of a circle, provided that the first and second power source connectors are moved into mutual engagement. However, the guide surfaces and the guide means are preferably adapted to guide the movements of the first and second power source connectors along a predetermined rectilinear path. These guide surfaces and guide means may comprise a pin cooperating with a guiding slot, a channel and a slide member slidingly received therein, and any other surfaces cooperating so as to move the power source connectors along the desired path. In the preferred embodiment the frame structure comprises a tubular housing having open front and rear ends, and the connector carrier member may be a U-shaped member having a pair of legs slidingly mounted to a pair of opposite side walls of the housing, and an interconnecting portion carrying said first power connector and extending across the open rear end of the tubular housing.

The mounting device according to the invention may further comprise spring means for biasing the connector carrier member towards its said second position. When an apparatus mounted in such a mounting device is unlocked the bias of the spring means causes movement of the connector carrier member outwards to its second position, whereby the front portion of the apparatus is partly pushed out of the mounting device so that it may easily be gripped and removed.

It may be advantageous to use spring means with a bias exceeding the force necessary for bringing the said first and second power source connectors into mutual engagement. When an apparatus is inserted into the mounting device, the power connector of the apparatus may be engaged with the power connector of the carrier member while the latter is in its said second position, and the bias of the spring means may restrict the force which may be used for engaging the connectors, whereby the risk that unduly high forces are used may be eliminated.

The invention will now be further described with reference to the drawings, wherein
Fig. 1 is a perspective view showing an embodiment of the mounting · device according to the invention with an electric apparatus mounted therein, and
Fig. 2 shows the mounting device of Fig. 1 with the electric apparatus in a partly removed position.

The mounting device shown in the drawings comprises a tubular frame or housing 10, which is open at both ends, and which has a rectan-

P&V F4392 jA, 424392/KEV/IPb, 1984 09 13

gular cross-section with pairs of opposite narrow and broad side walls 11 and 12, respectively. The broad side walls 12 have openings or cut-outs 13 therein, and a transversely extending flange 14 is provided at the front end of the housing 10. A wall or panel 15, which may, for example, be the instrument panel of a car or a boat, has an opening formed therein with an outline corresponding to the rectangular cross-sectional shape of the tubular housing 10. The housing 10 has been inserted into the opening of the panel 15 so that the flange 14 thereof is in engagement with the outer or front side of the panel or wall 15, while the remaining part of the housing extends from the rear or inner side thereof. The housing 10 is fastened to the wall or panel 15 by means of a pair of clamping devices 16 which are mounted in the narrow side walls 11 and each of which comprises an abutment member 17 and a screw 18 having a screw head which is accessible through the open front end of the tubular housing 10. The abutment members 17 may be pressed into engagement with the rear or inner side of the wall or panel 15 by screwing the screws 18, whereby part of the panel 15 is clamped between the abutment members 17 and the oppositely arranged parts of the flange 14.

An electric apparatus, such as a radio or a radiophone 19 is adapted to be received in the frame or housing 10, and the apparatus 19 has a casing 20 containing the various electronic components of the apparatus 19 and a front panel 21 with various push buttons 22 and a display 23. The outer cross-sectional shape of the casing 20 corresponds to the inner cross-sectional shape of the tubular housing 10 so that the casing 20 may be pushed into and snugly received in the housing as shown in the drawings.

A longitudinally extending, outwardly open channel 24 is formed in each of the narrow side walls 11 of the housing 10 which may, for example, be made from sheet metal, and the bottom and side walls of the channel form a corresponding ridge on the inner side of the respective narrow side walls, and these ridges may be received in corresponding outwardly open channels 25 which are formed in opposite side walls of the casing 20 which may also be provided with cooling fins 26 at its rear end as shown in the drawings.

P&V F4392 jA, 424392/KEV/lPb, 1984 09 13

An electric plug connector 27 is arranged at the rear wall of the casing 20, and this plug connector should be brought into engagement with a socket connector 28 of the mounting device when the apparatus 19 is inserted into the housing 10 so as to connect the electrical components of the apparatus with an electric power source, such as a battery, and/or other external electric means or devices. The socket connector 28 is mounted on a U-shaped socket carrier 29 comprising a pair of legs 30, which are slidingly received in the channels 24 of the housing 10, and a connecting part 31 formed integrally with the legs 30 and carrying the socket connector 28 and an antenna socket 32 which is connected to an antenna via a coaxial cable (not shown). Each of the legs 30 is connected to the adjacent narrow side wall 11 of the housing 10 by some kind of lost motion connection, so that the socket carrier 29 may perform a limited movement in relation to the housing 10. As shown in the drawing, the lost motion connection may comprise a pair of slots 33 formed in the bottom wall of each channel 24, and a pair of pins 34 each extending through an associated slot and having an enlarged head at its free end.

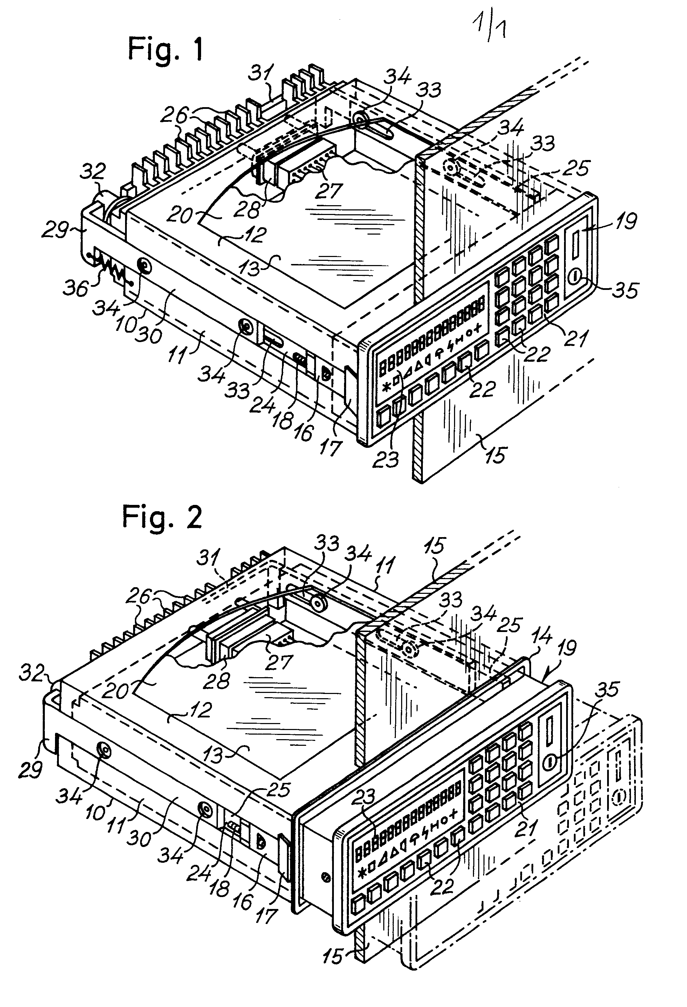

When the apparatus or radiophone 19 is inserted into the front opening of the housing 10 and pushed inwards, the movement of the apparatus will be guided by the interengaging surfaces of the channels 25 formed in the casing 20 and the corresponding inner ridges formed on the narrow side walls 11 of the housing 10, so that the plug connector 27 is brought into engagement with the complementary socket connector 28, and so that the antenna socket 32 is brought into engagement with a corresponding antenna plug (not shown) on the rear wall of the casing 20. The lost motion connection formed by the slots and pins 33 and 34 is such that the socket carrier 29 is moved to its rearward position when the apparatus 19 has been pushed fully into the housing 10 so that the front panel 21 of the apparatus has been brought into engagement with the flange 14 of the housing 10 or the outer surface of the panel or wall 15. The apparatus may be locked to the mounting device in that position by means of a locking device 35 which may be operated by means of a corresponding key, not shown. Fig. 1 shows the apparatus 19 in such mounted and locked position.

P&V F4392 jA, 424392/KEV/lPb, 1984 09 13

When it is desired to remove the apparatus 19 from the mounting device the locking device 35 is unlocked and a slight, outwardly directed pull is applied to the apparatus, whereby the apparatus may be moved a small distance outwards together with the socket carrier 29, while the connectors 27, 28 and 32 remain in their engaged positions. Such a slight outward pulling force may be applied to the key of the locking device 35 or by gripping the front panel 21 of the apparatus 19 by the fingers. When the apparatus 19 has been retracted to the position shown in Fig. 2, further outward movement of the socket carrier 29 is stopped, because the pins 34 engage the ends of the associated slots 33. A further retraction of the apparatus 19 will therefore cause disengagement of the connectors 27, 28, 32 and will therefore require an increased pulling force. However, because the front portion of the apparatus 19 now extends from the wall or panel 15, it is now possible to have a firm grip on the apparatus.

The mounting device described above may comprise spring means indicated in Fig. 1 at 36 biasing the socket carrier 29 towards its forward position shown in Fig. 2. The apparatus 19 will then automatically be pushed outwards from the position shown in Fig. 1 to the position shown in Fig. 2 when the locking device 35 has been unlocked.

P&V F4392 jA, 424392/KEV/IPb, 1984 09 13

CLAIMS

1. A mounting device for releasably mounting an apparatus (19) and for connecting it to a power source or another external device, said mounting device comprising:

a first power source connector (28) for matingly receiving a corresponding second power source connector (27) on said apparatus (19),

a frame structure (10) for slidingly receiving the apparatus through an open end defined by a front portion of the frame structure, which includes guide surfaces for guiding the apparatus and said second power source connector (27) thereon along a predetermined path,

a connector carrier member (29) which carries said first power source connector (28), and which is connected to said frame structure (10) so as to be displaceable in relation thereto between a first position (Fig. 1) remote from said front portion, and a second position (Fig. 2) closer to the front portion, and

guide means (24, 30) for guiding the movement of the carrier member (29) between said first and second positions so as to cause said first power source connector (28) to follow said predetermined path, whereby said first and second connectors (27, 28) are brought into mutual engagement when the apparatus is inserted into the frame structure through said open end thereof.

2. A mounting device according to claim 1, wherein said apparatus is a radio, a wireless, or a radiophone (19).

3. A mounting device according to claim 1 or 2, wherein said first and second power source connectors (27, 28, 32) form an electric plug-and-socket connection.

4. A mounting device according to any of the claims 1-3, wherein said guide surfaces (25) and said guide means (24, 30) are adapted to guide the movements of the first and second power source connectors (27, 28, 32) along a predetermined rectilinear path.

P&V F4392 jA, 424392/KEV/IPb, 1984 09 13

5. A mounting device according to any of the claims 1-4, further comprising fastening means (16) for fastening the front portion of the frame structure (10) to a wall or panel (15) so as to align said open end of the frame structure with an opening defined in said wall or panel.

6. A mounting device according to any of the claims 1-5, wherein said guide means comprise a pin and slot connection (33, 34).

7. A mounting device according to any of the claims 1-6, wherein said guide means comprise a channel (24) and a slide member (30) slidingly received therein.

8. A mounting device according to any of the claims 1-7, wherein the frame structure comprises a tubular housing (10) having open front and rear ends, and wherein the connector carrier member is a U-shaped member (29) having a pair of legs (30) slidingly mounted on a pair of opposite walls (11) of the housing, and an interconnecting portion (31) carrying said first power source connector (28) and extending across the open rear end of the tubular housing (10).

9. A mounting device according to claim 8, wherein said legs (30) are slidingly received in channels (24) formed in the outer surfaces of said pair of said walls (11).

10. A mounting device according to claim 9, wherein said channels (24) are defined by channel walls which define corresponding elongated ridges at the inner surfaces of the said opposite side walls (11), the guide surfaces of the frame structure (10) comprising the surfaces of the said ridges.

11. A mounting device according to any of the claims 1-10, further comprising spring means (36) for biasing the connector carrier member (29) towards its said second position.

12. A mounting device according to claim 11, wherein the bias of the spring means (36) exceeds the force necessary for bringing the first and second power source connectors (27, 28, 32) into mutual engagement.

P&V F4392 jA, 424392/KEV/lPb, 1984 09 13

Fig. 1

Fig. 2

0180035

European Patent Office

**EUROPEAN SEARCH REPORT**

Application number

85112123.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| | | | H 05 K 5/00 |
| | No citations | | |

| | | | TECHNICAL FIELDS SEARCHED (Int. Cl.4) |
|---|---|---|---|
| | | | H 02 B<br>H 02 G<br>H 05 K |

The present search report has been drawn up for all claims

| Place of search | Date of completion of the search | Examiner |
|---|---|---|
| STOCKHOLM | 03-01-1986 | ÅKERBLOM CHRISTER |